# EUROPEAN PATENT APPLICATION

(11) **EP 4 209 469 A1**
(43) Date of publication of application: **12.07.2023**
(21) Application number: 21864164.5
(22) Date of filing: 23.08.2021
(51) Int. Cl.: C03C 10/14, C04B 35/14

(54) **INORGANIC COMPOSITION ARTICLE**

(30) Priority: 04.09.2020 JP 2020149312
(71) Applicant: Ohara, Inc., Sagamihara-shi, Kanagawa 252-5286 (JP)
(72) Inventor: KIKKAWA, Saya, Sagamihara-Shi Kanagawa 252-5286 (JP); OGASAWARA, Kohei, Sagamihara-Shi Kanagawa 252-5286 (JP); YAGI, Toshitaka, Sagamihara-Shi Kanagawa 252-5286 (JP)
(74) Representative: SSM Sandmair
(86) International application number: PCT/JP2021/030792
(87) International publication number: WO 2022/050106

(57) **Abstract**

Provided is an inorganic composition article that is hard and highly transparent.

The inorganic composition article includes at least one type selected from α-cristobalite and an α-cristobalite solid solution as a main crystal phase, has a coloring degree λ80 of 330 to 580 nm at a thickness of 10 mm, and has a Vickers hardness of 620 or more.

## Description

### FIELD OF THE DISCLOSURE

The present disclosure relates to an inorganic composition article.

### BACKGROUND OF THE DISCLOSURE

Various types of inorganic materials are expected to be used as a cover glass or a housing for protecting a display of a portable electronic device such as a smartphone or a tablet PC, a protector for protecting a lens of an in-vehicle optical device, an interior bezel, a console panel, a touch panel material, a smart key, and the like. These devices are required to be used in harsh environments, and there is an increasing demand for inorganic materials having higher hardness. Furthermore, depending on the application, high transparency or low coloration is required.

Crystallized glass is a type of glass having increased strength. The crystallized glass is obtained by precipitating crystals inside of the glass, and is known to have superior mechanical strength to amorphous glass. Chemical strengthening is known as a method for strengthening crystallized glass.

Patent Document 1 discloses a material composition of an inorganic composition substrate for an information recording medium. Patent Document 1 states that an α-cristobalite-based inorganic composition article may be chemically strengthened and may be utilized as a material substrate having high strength. However, crystallized glass for an information recording medium, of which a substrate for a hard disk is a representative example, is not intended for use in a harsh environment and transparency has also not been required.

### CITATION LIST

### [Patent Literature]

[Patent Document 1] Japanese Unexamined Patent Application Publication No. 2008-254984

### SUMMARY OF THE DISCLOSURE

### Technical Problem

An object of the present disclosure is to provide an inorganic composition article that is hard and highly transparent.

The present disclosure provides the following.

### (Configuration 1)

An inorganic composition article containing at least one type selected from α-cristobalite and an α-cristobalite solid solution as a main crystal phase, in which a coloring degree λ80 at a thickness of 10 mm is 330 to 580 nm, and a Vickers hardness is 620 or more.

### (Configuration 2)

The inorganic composition article according to Configuration 1, in which, by mass% in terms of oxide,
a content of a SiO₂ component is 50.0% to 75.0%,
a content of a LizO component is 3.0% to 10.0%,
a content of an Al₂O₃ component is 5.0% or more and less than 15.0%,
a content of a B₂O₃ component is 0% to 10.0%, and
a content of a ZrOz component is more than 0% and 10.0% or less.

### (Configuration 3)

The inorganic composition article according to Configuration 1 or 2, in which, by mass% in terms of oxide, a total content of the Al₂O₃ component and the ZrO₂ component is 9.5% or more.

### (Configuration 4)

The inorganic composition article according to any one of Configurations 1 to 3, in which, by mass% in terms of oxide,
a content of a K₂O component is 0% to 5.0%, and
a content of a P₂O₅ component is 0% to 10.0%.

### (Configuration 5)

The inorganic composition article according to any one of Configurations 1 to 4, in which, by mass% in terms of oxide,
a content of a Na₂O component is 0% to 4.0%,
a content of a MgO component is 0% to 4.0%,
a content of a CaO component is 0% to 4.0%,
a content of a SrO component is 0% to 4.0%,
a content of a BaO component is 0% to 5.0%,
a content of a ZnO component is 0% to 10.0%, and
a content of a Sb₂O₃ component is 0% to 3.0%.

### (Configuration 6)

The inorganic composition article according to any one of Configurations 1 to 5, in which, by mass% in terms of oxide,
a content of a Nb₂O₅ component is 0% to 5.0%,
a content of a TazOs component is 0% to 6.0%, and
a content of a TiO₂ component is 0% or more and less than 1.0%.

### (Configuration 7)

The inorganic composition article according to any one of Configurations 1 to 6, in which a Vickers hardness is 640 or more.

### EFFECTS OF THE DISCLOSURE

According to the present disclosure, it is possible to provide an inorganic composition article that is hard and highly transparent.

The inorganic composition article according to the present disclosure may be used for a protective member of a device or the like by taking advantage of a feature of the inorganic composition article of being an inorganic material having high hardness and transparency. The inorganic composition article according to the present disclosure may be utilized as a cover glass or a housing of a smartphone, a member of a portable electronic device such as a tablet PC and a wearable terminal, and a protective protector, a member of a substrate for a head-up display, or the like used in a transport vehicle such as a car and an airplane. The inorganic composition article according to the present disclosure can also be used for other electronic devices and machinery, a building member, a member for a solar panel, a member for a projector, and a cover glass (windshield) for eyeglasses and watches, for example.

### DETAILED DESCRIPTION OF THE EXEMPLARY EMBODIMENTS

Embodiments and examples of an inorganic composition article according to the present disclosure will be described below in detail. However, the present disclosure is not limited to the following embodiments and examples, and may be implemented with appropriate changes within the scope of the object of the present disclosure.

The "inorganic composition article" in the present disclosure is composed of inorganic composition materials such as glass, crystallized glass, ceramics, or a composite material thereof. For example, an article obtained by shaping these inorganic materials into a desired shape by processing or synthesis through a chemical reaction corresponds to the article according to the present disclosure. A green compact obtained by crushing the inorganic materials and then pressurizing the same, and a sintered body obtained by sintering the green compact, for example, also corresponds to the article according to the present disclosure. The shape of the article obtained here is not limited in smoothness, curvature, size, and the like. Examples of the shape include a plate-shaped substrate, a shaped body having a curvature, and a three-dimensional structure having a complicated shape.

The inorganic composition article according to the present disclosure contains, as the main crystal phase, one or more types selected from α-cristobalite and an α-cristobalite solid solution. The mechanical strength increases when the inorganic composition article contains these crystal phases.

The term "main crystal phase" as used herein corresponds to a crystal phase contained in the largest amount in the crystallized glass, as determined from a peak of an X-ray diffraction pattern.

The inorganic composition article of the present disclosure has a coloring degree λ80 of 330 to 580 nm, more preferably 330 to 550 nm, still more preferably 330 to 530 nm, and yet still more preferably 330 to 500 nm at a thickness of 10 mm. The coloring degree is lower and the transparency is higher, when the wavelength of the coloring degree λ80 is smaller.

The inorganic composition article of the present disclosure has a coloring degree λ5 of 370 nm or less, more preferably 360 nm or less, and still more preferably 350 nm or less at a thickness of 10 mm. The coloring degree is lower and the transparency is higher, when the wavelength of the coloring degree λ5 is smaller.

The inorganic composition article of the present disclosure has a Vickers hardness of 620 or more, more preferably 630 or more, and still more preferably 640 or more.

Suitable composition ranges for constituting the inorganic composition article are described below. As used herein, contents of each component are all expressed by mass% in terms of oxide unless otherwise specified. Here, "in terms of oxide" means, if it is assumed that all the components included in the crystallized glass are dissolved and converted into oxides and a total mass of the oxides is 100 mass%, an amount of oxides in each of the components contained in the crystallized glass is expressed by mass%. As used herein, "A% to B%" represents A% or more and B% or less.

In the inorganic composition article of the present disclosure, preferably,
by mass% in terms of oxide,
a content of a SiO₂ component is 50.0% to 75.0%,
a content of a LizO component is 3.0% to 10.0%,
a content of an Al₂O₃ component is 5.0% or more and less than 15.0%,
a content of a B₂O₃ component is 0% to 10.0%, and
a content of a ZrO₂ component is more than 0% and 10.0% or less. This composition facilitates the formation of one or more types of crystal phases selected from α-cristobalite and an α-cristobalite solid solution.

The SiOz component is an essential component necessary for constituting one or more types selected from α-cristobalite and an α-cristobalite solid solution. If the content of the SiO₂ component exceeds 75.0%, there may be an excessive increase in viscosity and deterioration of meltability. If the content of the SiO₂ component is less than 50.0%, the devitrification resistance may easily deteriorate.

Preferably, an upper limit of the content of the SiO₂ component is 75.0% or less, 74.0% or less, 73.0% or less, 72.0% or less, or 70.0% or less. Preferably, a lower limit of the content of the SiO₂ component is 50.0% or more, 55.0% or more, 58.0% or more, or 60.0% or more.

The Li₂O component is a component for improving the meltability of raw glass. However, if the amount of the LizO component is less than 3.0%, it is not possible to obtain the above-described effect and thus, it is difficult to melt the raw glass. If the content of the LizO component exceeds 10.0%, an amount of lithium disilicate crystals being produced increases. The LizO component is a component contributing to chemical strengthening.

Preferably, a lower limit of the content of the Li₂O component is 3.0% or more, 3.5% or more, 4.0% or more, 4.5% or more, 5.0% or more, or 5.5% or more. Preferably, an upper limit of the content of the Li₂O component is 10.0% or less, 9.0% or less, 8.5% or less, or 8.0% or less.

The Al₂O₃ component is a component suitable for improving the mechanical strength of the inorganic composition article. If the content of the Al₂O₃ component is 15.0% or more, the meltability and the devitrification resistance may deteriorate, and if the content is less than 5.0%, the effect of improving the mechanical strength may be poor.

Preferably, an upper limit of the content of the Al₂O₃ component is less than 15.0%, 14.5% or less, 14.0% or less, 13.5% or less, or 13.0% or less. Preferably, a lower limit of the content of the Al₂O₃ component is 5.0% or more, 5.5% or more, 5.8% or more, 6.0% or more, or 6.5% or more.

The B₂O₃ component is a component suitable for lowering the glass transition temperature of the inorganic composition article. However, if the amount of the B₂O₃ component exceeds 10.0%, the chemical durability tends to decrease.

Preferably, an upper limit of the content of the B₂O₃ component is 10.0% or less, 8.0% or less, 7.0% or less, 5.0% or less, or 4.0% or less. A lower limit of the content of the B₂O₃ component may be 0%, 0.001% or more, 0.01% or more, 0.05% or more, 0.10% or more, or 0.30% or more.

The ZrO₂ component is a component that can improve the mechanical strength. However, if the amount of the ZrO₂ component exceeds 10.0%, the meltability may deteriorate.

Preferably, an upper limit of the content of the ZrO₂ component is 10.0% or less, 9.0% or less, 8.5% or less, or 8.0% or less. A lower limit of the content of the ZrO₂ component may be more than 0%, 1.0% or more, 1.5% or more, or 2.0% or more.

If the sum of the contents of the Al₂O₃ component and the ZrO₂ component, that is, [Al₂O₃ + ZrO₂], is large, the compressive stress on the surface increases when strengthening is performed. Preferably, a lower limit of [Al₂O₃ + ZrO₂] is 9.5% or more, 10.0% or more, 11.0% or more, 12.0% or more, or 13.0% or more.

On the other hand, if the content of [Al₂O₃ + ZrOz] is too large, the meltability may easily deteriorate. Therefore, an upper limit of [Al₂O₃ + ZrO₂] is preferably 22.0% or less, 21.0% or less, 20.0% or less, or 19.0% or less.

A lower limit of the total content of the SiO₂ component, the Li₂O component, the Al₂O₃ component, the B₂O₃ component, and the ZrO₂ component may preferably be 75.0% or more, 80.0% or more, 83.0% or more, or 85.0% or more.

A P₂O₅ component is an optional component that can be added to act as a crystal nucleating agent for the glass. However, if the amount of the P₂O₅ component exceeds 10.0%, the devitrification resistance is likely to deteriorate and phase separation may easily occur in the glass.

Preferably, an upper limit of the content of the P₂O₅ component is 10.0% or less, 8.0% or less, 6.0% or less, 5.0% or less, or 4.0% or less. Preferably, a lower limit of the P₂O₅ component may be 0% or more, 0.5% or more, 1.0% or more, or 1.5% or more.

A K₂O component is an optional component contributing to chemical strengthening. Preferably, a lower limit of the K₂O component may be 0% or more, 0.1% or more, 0.3% or more, or 0.5% or more.

If the content of the K₂O component is too large, it may be difficult to precipitate crystals. Thus, an upper limit of the K₂O component may preferably be 5.0% or less, 4.0% or less, 3.5% or less, or 3.0% or less.

The Na₂O component is an optional component contributing to chemical strengthening. If the content of the Na₂O component is too large, it may be difficult to obtain a desired crystal phase. Preferably, an upper limit of the content of the Na₂O component may be 4.0% or less, or 3.5% or less, more preferably 3.0% or less, and still more preferably 2.5% or less.

An MgO component, a CaO component, a SrO component, a BaO component, and a ZnO component are optional components that improve the meltability at low temperatures, and may be contained within a range that does not impair the effects of the present disclosure. Therefore, an upper limit of the MgO component may preferably be 4.0% or less, 3.5% or less, 3.0% or less, or 2.7% or less. Preferably, a lower limit of the MgO component may be 0% or more, more than 0%, 0.3% or more, or 0.4% or more. Preferably, an upper limit of the CaO component may be 4.0% or less, 3.0% or less, 2.5% or less, or 2.0% or less. Preferably, an upper limit of the SrO component may be 4.0% or less, 3.0% or less, 2.5% or less, or 2.0% or less. Preferably, an upper limit of the BaO component may be 5.0% or less, 4.0% or less, 3.0% or less, 2.5% or less, or 2.0% or less. Preferably, an upper limit of the ZnO component may be 10.0% or less, 9.0% or less, 8.5% or less, 8.0% or less, or 7.5% or less. Preferably, a lower limit of the ZnO component may be 0% or more, more than 0%, 0.5% or more, or 1.0% or more.

As long as the effects of the present disclosure are not impaired, the inorganic composition article may or may not contain each of a NbzOs component, a TazOs component, and a TiOz component. The NbzOs component is an optional component that improves the mechanical strength of the crystallized glass, if the content of the NbzOs component exceeds 0%. Preferably, an upper limit of the NbzOs component may be 5.0% or less, 4.0% or less, 3.5% or less, or 3.0% or less. The Ta₂O₅ component is an optional component that improves the mechanical strength of the crystallized glass, if the content of the TazOs component exceeds 0%. Preferably, an upper limit of the TazOs component may be 6.0% or less, 5.5% or less, 5.0% or less, or 4.0% or less. The TiOz component is an optional component that improves the chemical durability of the crystallized glass, if the content of the TiOz component exceeds 0%. Preferably, an upper limit of the content of the TiOz component may be less than 1.0%, 0.8% or less, 0.5% or less, or 0.1% or less.

As long as the effect of the present disclosure is not impaired, the inorganic composition article may or may not contain each of a La₂O₃ component, an Y₂O₃ component, a Gd₂O₃ component, a WO₃ component, a TeOz component, and a Bi₂O₃ component. The blending amount of each of the components may be from 0% to 2.0%, 0% to less than 2.0%, or from 0% to 1.0%.

As long as the characteristics of the inorganic composition article according to the present disclosure are not impaired, the inorganic composition article may or may not contain other components not described above. Examples of the other components include metal components such as Yb, Lu, V, Cr, Mn, Fe, Co, Ni, Cu, Ag, and Mo (including metal oxides thereof).

A Sb₂O₃ component may be contained as a glass clarifying agent. On the other hand, if the content of the Sb₂O₃ component is too large, the transmittance in the short wavelength region of the visible light region may deteriorate. Therefore, an upper limit of the Sb₂O₃ component may preferably be 3.0% or less, more preferably 1.0% or less, and still more preferably 0.6% or less.

In addition to the Sb₂O₃ component, the inorganic composition article may or may not contain a SnOz component, a CeOz component, an As₂O₃ component, and one or more types selected from the group consisting of F, NOx, and SOx as the glass clarifying agent. It is noted that an upper limit of the content of the clarifying agent is preferably 3.0% or less, more preferably 1.0% or less, and most preferably 0.6% or less.

On the other hand, there is a tendency to refrain from using components of Pb, Th, Tl, Os, Be, Cl, and Se, which are considered in recent years as harmful chemical substances, and thus, it is preferable that these components are substantially not contained.

The inorganic composition article can be produced by the following method. That is, raw materials are uniformly mixed so that the components satisfy a predetermined content range, and are melted and shaped to produce a raw material article. This raw material article is then crystallized to produce the inorganic composition article of the present disclosure.

The raw material article may be treated by heat for precipitation of crystals at a one-stage temperature or a two-stage temperature.

The two-stage heat treatment includes a nucleation step of firstly treating the raw material article by heat at a first temperature and a crystal growth step of treating, after the nucleation step, the article by heat at a second temperature higher than that in the nucleation step.

The first temperature of the two-stage heat treatment may be preferably 450°C to 750°C, more preferably 500°C to 720°C, and still more preferably 550°C to 680°C. A retention time at the first temperature is preferably 30 minutes to 2000 minutes, and more preferably 180 minutes to 1440 minutes.

The second temperature in the two-stage heat treatment may be preferably 550°C to 850°C, and more preferably 600°C to 800°C. A retention time at the second temperature is preferably 30 minutes to 600 minutes, and more preferably 60 minutes to 400 minutes.

In the one-stage heat treatment, the nucleation step and the crystal growth step are continuously performed at the one-stage temperature. Typically, the temperature is raised to a predetermined heat treatment temperature, is maintained for a certain period of time after reaching the predetermined heat treatment temperature, and is then lowered.

When the heat treatment is performed at the one-stage temperature, the heat treatment temperature is preferably 600°C to 800°C, and more preferably 630°C to 770°C. A retention time at the heat treatment temperature is preferably 30 minutes to 500 minutes, and more preferably 60 minutes to 400 minutes.

The obtained inorganic composition article can be strengthened to form a compressive stress layer on the surface. An example of a strengthening method includes a chemical strengthening method in which an alkaline component present in a surface layer of the inorganic composition article is subject to an exchange reaction with an alkaline component having a larger ionic radius to form a compressive stress layer on the surface layer. Other examples include a heat strengthening method in which the inorganic composition article is heated and subsequently quenched, and an ion implantation method in which ions are implanted into the surface layer of the inorganic composition article.

The chemical strengthening method may be implemented by the following steps, for example. An inorganic composition article is contacted with or immersed in a molten salt of a salt containing potassium or sodium, for example, potassium nitrate (KNO₃), sodium nitrate (NaNO₃) or a mixed salt or a composite salt thereof. The treatment of contacting or immersing the crystallized glass with or into the molten salt (chemical strengthening treatment) may be performed in one stage or in two stages.

The heat strengthening method is not particularly limited. For example, the inorganic composition article may be heated to 300°C to 600°C, and then, be subjected to rapid cooling such as water cooling and/or air cooling to form the compressive stress layer by a temperature difference between the surface and the inside of the glass. When the heat strengthening method is combined with the above-described chemical treatment method, it is possible to more effectively form the compressive stress layer.

The ion implantation method is not particularly limited. For example, any type of ion may be caused to collide with the surface of the inorganic composition article with an acceleration energy and an acceleration voltage that do not destroy the surface, to implant the ions into the surface. Thereafter, by performing heat treatment as necessary, it is possible to form the compressive stress layer on the surface in a similar manner as in the other methods.

### EXAMPLES

### Examples 1 to 38 and Comparative Example 1

Raw materials such as oxides, hydroxides, carbonates, nitrates, fluorides, chlorides, and metaphosphate compounds corresponding to a raw material of each component of the crystallized glass were selected, and the selected raw materials were weighed and mixed uniformly to obtain the compositions described in Tables 1 to 4.

Next, the mixed raw materials were injected into a platinum crucible and melted in an electric furnace at 1300°C to 1600°C for 2 to 24 hours depending on the difficulty of melting the glass composition. Subsequently, the molten glass was homogenized by stirring, and cooled to 1000°C to 1450°C. Then, the molten glass was cast into a mold and cooled slowly to prepare raw glass. The obtained raw glass was heated under the crystallization conditions described in Tables 1 to 4 to prepare crystallized glass.

Crystal phases of the crystallized glass of Examples 1 to 38 and Comparative Example 1 were determined from an angle of a peak appearing in the X-ray diffraction pattern using an X-ray diffraction analyzer (D8 Discover manufactured by Bruker). In the crystallized glass of Examples 1 to 38, all the main peaks (peaks with the highest intensity and the largest peak area) were observed at positions corresponding to the peak pattern of α-cristobalite and/or an α-cristobalite solid solution. Therefore, it was determined that the α-cristobalite and/or the α-cristobalite solid solution were precipitated as the main crystal phase in all glasses. In the crystallized glass of Comparative Example 1, the peaks of α-cristobalite and the α-cristobalite solid solution were not observed. In Comparative Example 1, crystal phases of MgAl₂O₄ and MgTi₂O₄ were confirmed.

The manufactured crystallized glass was cut and ground, and opposing sides of the glass were further polished in parallel to achieve a thickness of 10 mm to obtain a crystallized glass substrate.

The crystallized glass was evaluated as follows. The results are shown in Tables 1 to 4.

### (1) Vickers Hardness

A square pyramid diamond indenter having an angle of 136° between opposing sides was used to measure the Vickers hardness as a value obtained by dividing the load when a pyramid-shaped depression was formed on the test surface, by the surface area (mm²) calculated from the length of the depression. The measurement was performed at a test load of 100 gf and a holding time of 10 seconds using a micro Vickers hardness tester HMV-G21D manufactured by Shimadzu Corporation.

### (2) Coloring Degree

The light transmittance including reflection loss at a thickness of 10 mm was measured by using a spectrophotometer (U-4000 model manufactured by Hitachi High Technology). A wavelength (λ5) at which the transmittance is 5% and a wavelength (λ80) at which the transmittance is 80% were determined.

**[Table 1]**

| Examples | | | 1 | 2 | 3 | 4 | 5 | 6 | 7 | 8 | 9 | 10 | 11 |
|---|---|---|---|---|---|---|---|---|---|---|---|---|---|
| Composit ion [mass%] | SiO₂ | | 67.42 | 66.68 | 64.86 | 64.20 | 64.20 | 64.20 | 64.20 | 64.20 | 64.20 | 64.20 | 64.20 |
| | Al₂O₃ | | 12.20 | 12.44 | 12.44 | 12.10 | 12.10 | 12.10 | 12.10 | 11.60 | 12.10 | 12.10 | 12.10 |
| | B₂O₃ | | | | | | | | | | | | |
| | P₂O₅ | | 1.50 | 2.04 | 2.04 | 2.60 | 2.60 | 2.60 | 2.60 | 2.60 | 2.60 | 2.20 | 2.20 |
| | Li₂O | | 7.00 | 7.14 | 7.14 | 6.97 | 7.17 | 6.97 | 6.97 | 6.97 | 6.97 | 7.37 | 7.37 |
| | Na₂O | | | | | | | | | | | | |
| | K₂O | | 1.00 | 1.53 | 1.53 | 1.50 | 1.50 | 1.50 | 1.50 | 1.50 | 1.50 | 1.50 | 1.50 |
| | MgO | | 0.30 | | 1.02 | 1.10 | 1.60 | 1.10 | 1.70 | 1.70 | 0.60 | 1.10 | 1.60 |
| | CaO | | | 0.41 | 0.41 | 0.55 | 0.55 | 1.25 | 0.65 | 0.65 | 0.55 | 1.25 | 0.75 |
| | BaO | | | | | | | | | | | | |
| | ZnO | | 3.50 | 4.08 | 4.88 | 5.30 | 4.60 | 4.60 | 4.60 | 5.10 | 5.80 | 4.60 | 4.60 |
| | ZrO₂ | | 7.00 | 5.60 | 5.60 | 5.60 | 5.60 | 5.60 | 5.60 | 5.60 | 5.60 | 5.60 | 5.60 |
| | TiO₂ | | | | | | | | | | | | |
| | Nb₂O₅ | | | | | | | | | | | | |
| | Ta₂O₅ | | | | | | | | | | | | |
| | Gd₂O₃ | | | | | | | | | | | | |
| | Sb₂O₃ | | 0.08 | 0.08 | 0.08 | 0.08 | 0.08 | 0.08 | 0.08 | 0.08 | 0.08 | 0.08 | 0.08 |
| | Total | | 100.00 | 100.00 | 100.00 | 100.00 | 100.00 | 100.00 | 100.00 | 100.00 | 100.00 | 100.00 | 100.00 |
| | Al₂O₃ + ZrO₂ | | 19.20 | 18.04 | 18.04 | 17.70 | 17.70 | 17.70 | 17.70 | 17.20 | 17.70 | 17.70 | 17.70 |
| Crystalliz ation Conditio ns | Nucleation | Temperature [°C] | 600 | 600 | 600 | 600 | 600 | 600 | 600 | 600 | 600 | 600 | 600 |
| | | Retention time [h] | 5 | 5 | 5 | 5 | 5 | 5 | 5 | 5 | 5 | 5 | 5 |
| | Crystal growth | Temperature [°C] | 740 | 720 | 720 | 700 | 680 | 700 | 700 | 690 | 720 | 700 | 700 |
| | | Retention time [h] | 5 | 5 | 5 | 5 | 5 | 5 | 5 | 5 | 5 | 5 | 5 |
| Coloring Degree | λ80 [nm] | | 333 | 436 | 457 | 466 | 412 | 473 | 468 | 441.5 | 386 | 528 | 463 |
| | λ5 [nm] | | 287 | 295 | 298 | 300 | 291 | 300 | 298 | 296.5 | 291 | 308 | 299 |
| Hv_100gf | | | 640 | 657 | 664 | 669 | 657 | 680 | 682 | 657 | 659 | 664 | 664 |

**Table 2**

| Examples | | | 12 | 13 | 14 | 15 | 16 | 17 | 18 | 19 | 20 | 21 | 22 |
|---|---|---|---|---|---|---|---|---|---|---|---|---|---|
| Composit ion [mass%] | SiO₂ | | 64.86 | 64.20 | 64.20 | 64.20 | 64.66 | 64.36 | 64.86 | 64.86 | 64.20 | 64.36 | 64.86 |
| | Al₂O₃ | | 12.44 | 12.10 | 12.10 | 12.40 | 11.94 | 12.44 | 12.44 | 12.44 | 12.10 | 12.44 | 12.44 |
| | B₂O₃ | | | | | | | 0.50 | 1.00 | | 0.50 | | 1.00 |
| | P₂O₅ | | 2.04 | 2.85 | 2.60 | 2.60 | 2.04 | 2.04 | 2.04 | 2.04 | 2.60 | 2.04 | 2.04 |
| | Li₂O | | 7.14 | 6.97 | 6.97 | 6.97 | 7.14 | 7.14 | 7.14 | 7.14 | 6.97 | 7.14 | 7.14 |
| | Na₂O | | 0.50 | | | | | | | | | | |
| | K₂O | | 1.03 | 1.50 | 1.50 | 1.50 | 1.53 | 1.53 | 1.53 | 1.53 | 1.50 | 1.53 | 1.53 |
| | MgO | | 1.02 | 1.10 | 1.65 | 0.60 | 2.52 | 1.02 | 1.02 | 1.02 | 1.70 | 1.02 | 2.02 |
| | CaO | | 0.41 | 1.00 | | 0.55 | 0.41 | 0.41 | 0.41 | 0.41 | 0.65 | 0.41 | 0.41 |
| | Bao | | | | | | | | | | | | |
| | ZnO | | 4.88 | 4.60 | 5.30 | 5.50 | 4.08 | 4.88 | 3.88 | 4.38 | 4.10 | 4.88 | 2.88 |
| | ZrO₂ | | 5.60 | 5.60 | 5.60 | 5.60 | 5.60 | 5.60 | 5.60 | 5.60 | 5.60 | 5.60 | 5.60 |
| | TiO₂ | | | | | | | | | | | | |
| | Nb₂O₅ | | | | | | | | | | | | |
| | Ta₂O₅ | | | | | | | | | | | 0.50 | |
| | Gd₂O₃ | | | | | | | | | 0.50 | | | |
| | Sb₂O₃ | | 0.08 | 0.08 | 0.08 | 0.08 | 0.08 | 0.08 | 0.08 | 0.08 | 0.08 | 0.08 | 0.08 |
| | Total | | 100.00 | 100.00 | 100.00 | 100.00 | 100.00 | 100.00 | 100.00 | 100.00 | 100.00 | 100.00 | 100.00 |
| | Al₂O₃ + ZrO₂ | | 18.04 | 17.70 | 17.70 | 18.00 | 17.54 | 18.04 | 18.04 | 18.04 | 17.70 | 18.04 | 18.04 |
| Crystalliz ation Conditio ns | Nucleation | Temperature [°C] | 600 | 600 | 600 | 600 | 600 | 600 | 600 | 600 | 600 | 600 | 600 |
| | | Retention time [h] | 5 | 5 | 5 | 5 | 5 | 5 | 5 | 5 | 5 | 5 | 5 |
| | Crystal growth | Temperature [°C] | 700 | 700 | 720 | 720 | 700 | 700 | 680 | 700 | 680 | 720 | 660 |
| | | Retention time [h] | 5 | 5 | 5 | 5 | 5 | 5 | 5 | 5 | 5 | 5 | 5 |
| Coloring Degree | λ80 [nm] | | 551 | 361 | 520 | 386 | 567 | 465 | 350 | 426 | 413 | 538 | 404 |
| | λ5 [nm] | | 313 | 290 | 308 | 291 | 317 | 298 | 289 | 294 | 294 | 313 | 293 |
| Hv_100gf | | | 667 | 659 | 657 | 654 | 657 | 654 | 649 | 659 | 662 | 662 | 649 |

**[Table 3]**

| Examples | | | 23 | 24 | 25 | 26 | 27 | 28 | 29 | 30 | 31 | 32 | 33 |
|---|---|---|---|---|---|---|---|---|---|---|---|---|---|
| Composit ion [mass%] | SiO₂ | | 64.20 | 64.86 | 64.86 | 64.86 | 64.86 | 64.86 | 64.86 | 70.00 | 69.00 | 60.00 | 67.20 |
| | Al₂O₃ | | 12.40 | 12.44 | 12.64 | 12.44 | 12.44 | 12.74 | 12.44 | 7.50 | 12.80 | 12.10 | 5.60 |
| | B₂O₃ | | 1.00 | 1.00 | 1.00 | 2.00 | 2.00 | 2.00 | 2.00 | | | 3.00 | 1.15 |
| | P₂O₅ | | 2.60 | 2.04 | 2.04 | 2.04 | 2.04 | 2.04 | 2.04 | 2.00 | 2.00 | 3.80 | 2.60 |
| | Li₂O | | 6.97 | 7.14 | 7.14 | 7.14 | 7.14 | 7.14 | 7.64 | 7.00 | 7.50 | 6.97 | 5.97 |
| | Na₂O | | | | | | | | | | | 1.00 | 2.00 |
| | K₂O | | 1.50 | 1.53 | 1.33 | 1.53 | 1.53 | 1.23 | 1.03 | 2.50 | 0.50 | 0.50 | 1.50 |
| | MgO | | 0.60 | 1.02 | 1.02 | 1.02 | 0.52 | 1.02 | 1.02 | 1.70 | 0.50 | 1.10 | 2.20 |
| | CaO | | 0.55 | 0.41 | 0.41 | 0.41 | 0.41 | 0.41 | 0.41 | | | | |
| | BaO | | | | | | | | | 0.72 | | 1.25 | |
| | ZnO | | 4.50 | 3.88 | 3.88 | 2.88 | 3.38 | 2.88 | 2.88 | 6.50 | 2.00 | 4.60 | 5.10 |
| | ZrO₂ | | 5.60 | 5.60 | 5.60 | 5.60 | 5.60 | 5.60 | 5.60 | 2.00 | 5.60 | 5.60 | 5.60 |
| | TiO₂ | | | | | | | | | | | | |
| | Nb₂O₅ | | | | | | | | | | | | |
| | Ta₂O₅ | | | | | | | | | | | | |
| | Gd₂O₃ | | | | | | | | | | | | |
| | Sb₂O₃ | | 0.08 | 0.08 | 0.08 | 0.08 | 0.08 | 0.08 | 0.08 | 0.08 | 0.10 | 0.08 | 1.08 |
| | Total | | 100.00 | 100.00 | 100.00 | 100.00 | 100.00 | 100.00 | 100.00 | 100.00 | 100.00 | 100.00 | 100.00 |
| | Al₂O₃ + ZrO₂ | | 18.00 | 18.04 | 18.24 | 18.04 | 18.04 | 18.34 | 18.04 | 9.50 | 18.40 | 17.70 | 11.20 |
| Crystalliz ation Conditio ns | Nucleation | Temperature [°C] | 600 | 600 | 600 | 600 | 600 | 600 | 600 | 600 | 600 | 600 | 600 |
| | | Retention time [h] | 5 | 5 | 5 | 5 | 5 | 5 | 5 | 5 | 5 | 5 | 5 |
| | Crystal growth | Temperature [°C] | 700 | 660 | 660 | 660 | 680 | 660 | 660 | 690 | 690 | 680 | 670 |
| | | Retention time [h] | 5 | 5 | 5 | 5 | 5 | 5 | 5 | 5 | 5 | 5 | 5 |
| Coloring Degree | λ80 [nm] | | 357.5 | 359 | 351 | 344.5 | 370.5 | 339 | 365 | 457 | 461 | 377.5 | 507 |
| | λ5 [nm] | | 289 | 291 | 289 | 289 | 291 | 288.5 | 291 | 291 | 309 | 297 | 308.5 |
| Hv_100gf | | | 647 | 652 | 647 | 649 | 647 | 647 | 649 | 677 | 635 | 625 | 632 |

**[Table 4]**

| Examples | | | 34 | 35 | 36 | 37 | 38 | Comparative Example 1 |
|---|---|---|---|---|---|---|---|---|
| Composition [mass%] | SiO₂ | | 64.86 | 65.86 | 64.81 | 64.81 | 64.81 | 54.60 |
| | Al₂O₃ | | 10.74 | 6.24 | 11.72 | 11.72 | 12.72 | 18.00 |
| | B₂O₃ | | 2.00 | 4.00 | 2.00 | 2.00 | 2.00 | |
| | P₂O₅ | | 2.04 | 2.25 | 2.14 | 2.14 | 2.14 | |
| | Li₂O | | 7.14 | 8.14 | 7.13 | 7.13 | 7.13 | |
| | Na₂O | | | | 0.50 | 0.50 | 0.50 | 11.60 |
| | K₂O | | 1.23 | 1.73 | 0.73 | 0.73 | 0.73 | 2.40 |
| | MgO | | 1.02 | 1.02 | 1.02 | 1.02 | 1.02 | 7.85 |
| | CaO | | 0.41 | | 0.41 | | 0.41 | 0.85 |
| | BaO | | | | | | | |
| | ZnO | | 1.88 | 2.88 | 2.88 | 2.88 | 2.88 | |
| | ZrO₂ | | 8.68 | 7.60 | 5.60 | 5.60 | 5.60 | |
| | TiO₂ | | | | | | | 4.70 |
| | Nb₂O₅ | | | | 1.00 | | | |
| | Ta₂O₅ | | | | | 1.41 | | |
| | Gd₂O₃ | | | | | | | |
| | Sb₂O₃ | | | 0.28 | 0.06 | 0.06 | 0.06 | 0.08 |
| | Total | | 100.00 | 100.00 | 100.00 | 100.00 | 100.00 | 100.08 |
| | Al₂O₃ + ZrO₂ | | 19.42 | 13.84 | 17.32 | 17.32 | 18.32 | 18.00 |
| Crystallization Conditions | Nucleation | Temperature [°C] | 600 | 600 | 600 | 600 | 600 | |
| | | Retention time [h] | 5 | 5 | 5 | 5 | 5 | |
| | Crystal growth | Temperature [°C] | 680 | 640 | 660 | 660 | 660 | 705 |
| | | Retention time [h] | 5 | 5 | 5 | 5 | 5 | 5 |
| Coloring Degree | λ80 [nm] | | 430 | 568 | 463.5 | 411.5 | 339.5 | 598 |
| | λ5 [nm] | | 298.5 | 347.5 | 313 | 296 | 288 | 346 |
| Hv_100gf | | | 623 | 635 | 621 | 625 | 637 | 630 |

## Claims

1. An inorganic composition article comprising at least one type selected from α-cristobalite and an α-cristobalite solid solution as a main crystal phase, wherein a coloring degree λ80 at a thickness of 10 mm is 330 to 580 nm, and a Vickers hardness is 620 or more.

2. The inorganic composition article according to claim 1, wherein
by mass% in terms of oxide,
a content of a SiO₂ component is 50.0% to 75.0%,
a content of a LizO component is 3.0% to 10.0%,
a content of an Al₂O₃ component is 5.0% or more and less than 15.0%,
a content of a B₂O₃ component is 0% to 10.0%, and
a content of a ZrOz component is more than 0% and 10.0% or less.

3. The inorganic composition article according to claim 1 or 2, wherein, by mass% in terms of oxide, a total content of the Al₂O₃ component and the ZrO₂ component is 9.5% or more.

4. The inorganic composition article according to any one of claims 1 to 3, wherein
by mass% in terms of oxide,
a content of a K₂O component is 0% to 5.0%, and
a content of a P₂O₅ component is 0% to 10.0%.

5. The inorganic composition article according to any one of claims 1 to 4, wherein
by mass% in terms of oxide,
a content of a NazO component is 0% to 4.0%,
a content of a MgO component is 0% to 4.0%,
a content of a CaO component is 0% to 4.0%,
a content of a SrO component is 0% to 4.0%,
a content of a BaO component is 0% to 5.0%,
a content of a ZnO component is 0% to 10.0%, and
a content of an Sb₂O₃ component is 0% to 3.0%.

6. The inorganic composition article according to any one of claims 1 to 5, wherein,
by mass% in terms of oxide,
a content of a Nb₂O₅ component is 0% to 5.0%,
a content of a Ta₂O₅ component is 0% to 6.0%, and
a content of a TiO₂ component is 0% or more and less than 1.0%.

7. The inorganic composition article according to any one of claims 1 to 6, wherein the Vickers hardness is 640 or more.
